# EUROPÄISCHE PATENTSCHRIFT

(11) **EP 3 699 439 B1**
(45) Veröffentlichungstag und Bekanntmachung des Hinweises auf die Patenterteilung: **25.12.2024**
(21) Anmeldenummer: 20157820.0
(22) Anmeldetag: 18.02.2020
(51) Int. Cl.: F15B 13/16, F15B 13/10, F15B 15/22, F15B 15/14, B65H 49/16, D01H 1/18, F15B 13/042, F16K 35/16, F15B 11/06, F15B 13/04

(54) **STEUEREINHEIT ZUR PNEUMATISCHEN ANSTEUERUNG EINES AKTIVEN SPULENGATTERS**
CONTROL UNIT FOR THE PNEUMATIC CONTROL OF AN ACTIVE BOBBIN CREEL
UNITÉ DE COMMANDE PERMETTANT DE COMMANDER DE MANIÈRE PNEUMATIQUE UNE CANTRE ACTIVE

(30) Priorität: 20.02.2019 DE 102019104283
(43) Veröffentlichungstag der Anmeldung: 26.08.2020
(73) Patentinhaber: Saurer Technologies GmbH & Co. KG, 47804 Krefeld (DE)
(72) Erfinder: Crouzet, Alain, 07500 Guilherand Granges (FR); Dellen, Mark, 47906 Kempen (DE); Deitlaff, Michael, 47807 Krefeld (DE)
(74) Vertreter: Morgenthum-Neurode, Mirko

(56) Entgegenhaltungen:
- EP-A2- 1 357 209
- DE-A1- 3 200 531
- US-A- 2 159 879
- US-B2- 7 637 281

## Beschreibung

Die Erfindung betrifft eine Steuereinheit zur pneumatischen Ansteuerung eines Zylinders, insbesondere eines aktiven Spulengatters einer textilverarbeitenden Maschine oder einer Kabliermaschine, mit einem Drucklufteingang zum Anschluss einer Druckluftversorgung, einem Arbeitsluftausgang verbindbar mit dem wenigstens einseitig wirkenden Zylinder zum Betreiben des Zylinders, einer zwischen dem Drucklufteingang und dem Arbeitsluftausgang angeordneten Ventileinheit, sowie einem Bedienelement zum Öffnen der Ventileinheit zum Auslösen einer Hubbewegung des Zylinders, insbesondere des Spulengatters. Weiterhin betrifft die Erfindung ein Spulengatter für eine textilverarbeitende Maschine, insbesondere für eine Kabliermaschine. Schließlich umfasst die Erfindung ein Verfahren zum aktiven pneumatischen Bewegen eines Zylinders, insbesondere eines Spulengatters einer textilverarbeitenden Maschine, insbesondere einer Kabliermaschine.

Spulengatter sind in vielfältiger Ausgestaltung aus dem Stand der Technik bekannt. Dabei werden die Spulengatter bei textilverarbeitenden Maschinen, wie Spinn- oder Zwirnmaschinen, insbesondere Kalbiermaschinen, regelmäßig eingesetzt, um wenigstens eine, bevorzugt mehrere Vorlagespulen bereitzuhalten. Dazu sind die Spulengatter häufig über oder hinter einer oder mehreren Arbeitsstellen einer Kabliermaschine positioniert. Um zum Vorlagespulenwechsel besser an das Spulengatter gelangen zu können, lassen sich die Spulengatter häufig mittels eines Schwenkarms in eine bedienungsgerechte Lage verschwenken. Anschließend muss das Spulengatter wieder in eine obere, schwer zugängliche Gebrauchsposition gebracht werden, um Platz zu sparen und eine bessere Zugänglichkeit des Restes der textilverarbeitenden Maschine zu erreichen. Dies erfolgt geläufig pneumatisch, insbesondere mittels eines Pneumatikzylinders, wobei auch rein mechanische und/oder händische sowie hydraulische Lösungen bekannt sind.

Dabei werden die aus dem Stand der Technik bekannten, pneumatisch verschwenkbaren Spulengatter über einen Taster an einem Steuerventil betätigt, wobei ein Bediener den Taster über die gesamte Zeit einer Aufwärtsschwenkbewegung gedrückt halten muss bis das Spulengatter in einer stabilen Endposition angekommen ist. Üblicherweise weisen diese pneumatisch verschwenkbaren Spulengatter einen einseitig wirkenden Pneumatikzylinder auf, sodass die Abwärtsschwenkbewegung des Spulengatters händisch erfolgt. Dabei komprimiert sich die Luft im Pneumatikzylinder bzw. in dessen Kolbenraum, sodass der Bediener das Spulengatter ab einem Verschwenkwinkel des Spulengatters von etwa 20° - 30° (abhängig von der Spulenbeladung) loslassen kann und nicht weiter führen muss. Die weitere Abwärtsbewegung erfolgt dann automatisch gegen ein ablüftendes dämpfendes Druckpolster bis in eine untere Endlage. Aus der Druckschrift EP 1 357 209 A2 ist bereits ein Spulengatter für Textilmaschinen bekannt, das mittels eines Gelenkvierecks an einer an dem Maschinengestell der Textilmaschine angeordneten, das feststehende Glied des Viergelenks bildenden Halterung verschwenkbar gelagert ist und mittels eines einerseits an der Halterung und andererseits an einem der beweglichen Viergelenkglieder angelenkten Pneumatikzylinders aus einer unteren Beladeposition in eine obere Betriebsposition verschwenkbar ist, wobei zum Verschwenken des Spulengatters aus der Betriebsposition in die Beladeposition der Pneumatikzylinder ein zweiseitig mit Druckluft beaufschlagbarer Pneumatikzylinder ist.

Die Druckschriften US 2,159,879 und DE 32 00 531 A1 offenbaren jeweils eine Steuereinheit gemäß dem Oberbegriff des Anspruchs 1.

Der Erfindung liegt die Aufgabe zugrunde, eine Steuereinheit zur pneumatischen Ansteuerung eines Zylinders, ein Spulengatter für eine textilverarbeitende Maschine sowie ein Verfahren zum aktiven pneumatischen Bewegen eines Zylinders unter Verwendung einer solchen Steuereinheit bereitzustellen, wobei das Spulengatter eine besonders einfache Ansteuerung mittels der Steuereinheit aufweist, sodass ein Bediener das Spulengatter einfacher, schneller und sicherer benutzen kann und zudem das Spulengatter vor einer Beschädigung durch eine Fehlbedienung geschützt ist.

Die Aufgabe wird erfindungsgemäß durch eine Steuereinheit gemäß Anspruch 1, ein Spulengatter gemäß Anspruch 5 sowie ein Verfahren zum Bewegen eines Spulengatters gemäß Anspruch 10 gelöst. Vorteilhafte Weiterbildungen der Erfindung sind in den abhängigen Ansprüchen angegeben.

Die erfindungsgemäße Steuereinheit zur pneumatischen Ansteuerung eines Zylinders, insbesondere eines aktiven Spulengatters einer textilverarbeitenden Maschine oder einer Kabliermaschine, weist einen Drucklufteingang zum Anschluss einer Druckluftversorgung an die Steuervorrichtung, einen Arbeitsluftausgang verbindbar mit dem wenigstens einseitig wirkenden Zylinder zum Betreiben des Zylinders, eine zwischen dem Drucklufteingang und dem Arbeitsluftausgang angeordnete bzw. wirkende Ventileinheit sowie ein Bedienelement zum Öffnen der Ventileinheit zum Auslösen einer Hubbewegung des verbindbaren Zylinders, insbesondere eines Spulengatters, mittels des an dem Arbeitsluftausgang anschließbaren Zylinders auf. Dabei ist die Steuereinheit derart gebildet, dass eine selbsthaltende Ventilfunktion erreicht wird, bei der bei einer nur einmaligen und/oder kurzzeitigen Betätigung des Bedienelements die Hubbewegung des Zylinders vollständig ausführbar ist. Weiterhin ist vorgesehen, dass die Steuereinheit derart mit einem Endlagensensor des Zylinders verbindbar ist, dass bei einer Aktivierung des Endlagensensors die Ventileinheit geschlossen wird. Erfindungsgemäß weist die Ventileinheit einen Schieber auf, der durch die Betätigung des Bedienelements im Inneren der Steuereinheit von einer geschlossenen in eine geöffnete Position der Ventileinheit verschiebbar ist.

Die erfindungsgemäße Steuereinheit weist einen Sensorlufteingang zum Verbinden des Endlagensensors auf, wobei bei einem Druckanstieg und/oder einem Überschreiten eines Schwellendruckwerts die Ventileinheit geschlossen wird, wodurch die Steuereinheit sowie der damit verbundene Endlagensensor rein pneumatisch betrieben werden können. Der Endlagensensor kann dabei grundsätzlich ein beliebig mechanisch, elektronisch, pneumatisch und/oder hydraulisch wirkender bzw. betriebener Sensor sein. Bevorzugt leitet der Sensor Signale pneumatisch weiter und besonders bevorzugt ist der Sensor vollständig pneumatisch betrieben.

Erfindungsgemäß ist ein Magnet am Schieber derart angeordnet, dass der Schieber in der geöffneten Position der Ventileinheit durch die Haltekraft des Magneten in der geöffneten Position gehalten wird, wodurch in einfacher Weise eine Steuereinheit mit einer speziellen magnetischen Haltefunktion der Ventileinheit gebildet wird, die zu einer selbsthaltenden Ventilfunktion führt, sodass auch bei nur kurzzeitiger Betätigung des Bedienelements die Ventileinheit weiterhin zuverlässig in der geöffneten Position verbleibt. Bevorzugt ist der Magnet in der geöffneten Position der Ventileinheit bzw. der entsprechenden Position des Schiebers nahe genug an der gegenüberliegenden, magnetisch wechselwirkenden Oberfläche des Gehäuses angeordnet, dass eine ausreichend starke magnetische Wechselwirkung stattfindet, während in der geschlossenen Position der Ventileinheit bzw. der entsprechenden Position des Schiebers die magnetische Wechselwirkung wenigstens so schwach ist, dass der Schieber nicht in die geöffnete Position gezogen wird. Weiterhin bevorzugt ist der Magnet ein Permanentmagnet, wobei auch eine Gestaltung als Elektromagnet denkbar ist. Schließlich ist bevorzugt, dass dem Magnet gegenüberliegend in der Steuereinheit, besonders bevorzugt am Gehäuse der Steuereinheit, eine Metallplatte aus einem magnetisch anziehbaren Material, insbesondere aus Eisen, angeordnet ist.

Weiterhin ist der Sensorlufteingang derart angeordnet, dass ein daran angelegter Druck der Haltekraft des Magneten entgegenwirkt, wobei dazu der Sensorlufteingang mit einem Ventilraum verbunden ist, der zwischen dem Gehäuse der Steuereinheit, insbesondere einer daran angeordneten Metallplatte, und dem Magneten angeordnet ist, wodurch in einfacher Weise die Ventileinheit unmittelbar durch einen ansteigenden Druck am Sensorlufteingang von der geöffneten Position in die geschlossene Position verstellt werden kann. Ein ansteigender Druck am Sensorlufteingang führt dabei in einfacher Weise zu einer sprunghaften Positionsänderung von der geöffneten Position in die geschlossene Position der Ventileinheit sobald der Druck die Haltekraft des Magneten überschreitet. Dabei ist der Ventilraum bevorzugt derart angeordnet, dass ein Druckanstieg zu einer direkten Verschiebung des Schiebers in die geschlossene Position führt und/oder das durch den Sensorlufteingang eingeleitete Gas unmittelbar auf den Schieber wirkt.

Das erfindungsgemäße Spulengatter für eine textilverarbeitende Maschine, insbesondere für eine Kabliermaschine, weist eine erfindungsgemäße Steuereinheit sowie einen wenigstens einseitig wirkenden Zylinder zum Ausführen einer Hubbewegung des Spulengatters an der textilverarbeitenden Maschine auf, wobei die Steuereinheit und/oder der Zylinder derart gebildet sind, dass der Zylinder bei oder nach dem Erreichen einer Endlage der Hubbewegung automatisch drucklos wird.

Das erfindungsgemäße Verfahren zum aktiven pneumatischen Bewegen, insbesondere Anheben, eines Zylinders, insbesondere eines Spulengatters einer textilverarbeitenden Maschine oder einer Kabliermaschine, umfasst als Verfahrensschritte zunächst ein Betätigen des Bedienelements der erfindungsgemäßen Steuereinheit, wodurch die zwischen einem Drucklufteingang und dem Arbeitsluftausgang angeordnete Ventileinheit der Steuereinheit wenigstens solange geöffnet wird, dass eine Bewegung des Zylinders, insbesondere Hubbewegung des Spulengatters, mittels des an dem Arbeitsluftausgang angeschlossenen, wenigstens einseitig wirkenden Zylinders vollständig ausgeführt wird. Der nachfolgende Verfahrensschritt ist dann ein Überwachen der Bewegung des Zylinders mittels der Steuereinheit, wobei bei einem ansteigenden Druck und/oder einem Überschreiten eines Schwellendruckwerts an dem Sensorlufteingang der Steuereinheit die Ventileinheit geschlossen wird.

Die Erfinder sind im Rahmen der vorliegenden Erfindung zu einer neuen speziellen Steuereinheit mit einer neuen Ventileinheit als Steuerventil für einen neuen speziellen Zylinder gelangt. Dabei ermöglicht die Erfindung eine besonders einfache Bewegungssteuerung, die rein pneumatisch erfolgt. Weiterhin ist aufgrund eines binären Bedienprinzips - der Bediener muss das Bedienelement zum Auslösen der Hubbewegung nur kurz drücken - das Risiko von Bedienfehlern, insbesondere durch ein nicht vollständiges Ausführen der Hubbewegung, erheblich gesenkt oder sogar ausgeschlossen. Dass der Bediener das Bedienelement nicht über die gesamte Bewegungszeit während der Hubbewegung gedrückt halten muss, führt zudem zu einer schnelleren Bedienbarkeit und entsprechend kürzeren Handhabungszeit sowie zu einer erhöhten Betriebssicherheit, da der Bediener nach der Betätigung des Bedienelements einen sicheren Abstand vom verschwenkenden Spulengatter einnehmen kann. Weiterhin wird dadurch, dass der Zylinder beim Erreichen der Endlage drucklos wird, eine Druckdauerbelastung vermieden, wodurch ein kostengünstigerer Zylinder verwendet werden kann und zudem der Verschleiß reduziert und somit defekt- oder wartungsbedingte Ausfallzeiten deutlich reduziert werden können. Schließlich ermöglicht die erfindungsgemäße Steuereinheit eine deutlich kompaktere Bauweise.

Bei der Steuereinheit kann es sich grundsätzlich um ein beliebiges Bauteil oder eine beliebige Gruppe von Bauteilen handeln, wobei die Steuereinheit immer zur pneumatischen Steuerung wenigstens eines Zylinders vorgesehen ist. Bevorzugt ist die Steuereinheit eine kompakte bzw. integrale Einheit, deren Bestandteile besonders bevorzugt vollständig an und/oder innerhalb eines Gehäuses angeordnet sind. Ganz besonders bevorzugt ist die Ventileinheit vollständig innerhalb des Gehäuses angeordnet. Das wenigstens eine Bedienelement, insbesondere alle Bedienelemente, und/oder der Drucklufteingang und/oder der Arbeitslufteingang und/oder der Sensorlufteingang sind bevorzugt unmittelbar am Gehäuse angeordnet. Grundsätzlich kann die Steuereinheit auch weitere, über die pneumatische Steuerung eines oder mehrerer Zylinder hinausgehende Funktionen aufweisen, wobei die Steuereinheit bevorzugt keine weiteren Funktionen erfüllt. Darüber hinaus kann das Bedienelement auch grundsätzlich außerhalb und/oder nicht als Teil der Steuereinheit, insbesondere als Fernbedienung, gebildet sein.

Eine textilverarbeitende Maschine im Sinne der Erfindung kann grundsätzlich jede Maschine sein, die ein Textil bearbeitet und dabei insbesondere entweder einen Faden, ein Zwirn, einen Faserstrang oder dergleichen erzeugt oder verarbeitet. Bevorzugt werden an der Textilmaschine Fäden, Zwirne oder dergleichen zur weiteren Verarbeitung vorgelegt und dazu insbesondere an einem Spulengatter angeordnet. Besonders bevorzugt ist die textilverarbeitende Maschine eine Spinn- oder Zwirnmaschine und ganz besonders bevorzugt eine Kabliermaschine.

Ein Spulengatter ist eine Vorrichtung und insbesondere ein Teil einer Textilmaschine, mittels der wenigstens eine Spule, insbesondere eine Vorlagespule, gelagert und vorzugsweise auch der Textilmaschine zugeführt werden kann. Dazu kann das Spulengatter bevorzugt eine Verschwenkbewegung zwischen einer bedienungsgerechten Lage zum Bestücken des Spulengatters mit Spulen und einer Gebrauchslage ausführen, wobei besonders bevorzugt die Gebrauchslage räumlich oberhalb der bedienungsgerechten Lage gelegen ist. Vorzugsweise erfolgt wenigstens die Hubbewegung in die Gebrauchslage mittels eines Arbeitsfluids und dabei bevorzugt pneumatisch oder alternativ auch hydraulisch, insbesondere mittels wenigstens eines Zylinders. Ein Spulengatter, das in wenigstens einer Richtung pneumatisch oder motorisch verschwenkbar ist, wird dabei als aktives Spulengatter bezeichnet. Besonders bevorzugt erfolgt das Verschwenken und ganz besonders bevorzugt der gesamte Betrieb des Spulengatters ausschließlich pneumatisch und gegebenenfalls ergänzend händisch bzw. manuell durch einen Bediener. Ebenfalls bevorzugt ist das Spulengatter als eine einzige integrale Einheit mit einer speziellen Zylinderausführung gebildet. Das vollständige Ausführen einer Hubbewegung des Spulengatters wird als der Vorgang verstanden, bei dem die Ventileinheit dauerhaft bzw. solange offengehalten wird, bis eine Endlage des Spulengatters und/oder des Zylinders erreicht ist, wobei nach dem vollständigen Ausführen der Hubbewegung besonders bevorzugt ein pneumatischer Kolben des Zylinders vollständig ausgefahren ist.

Der Drucklufteingang ist erfindungsgemäß an der Steuereinheit vorgesehen, um die Steuereinheit an eine Arbeitsfluidversorgung, insbesondere eine Druckluftversorgung, anzuschließen. Durch das Zuführen von Druckluft zur Steuereinheit wird ein pneumatischer Antrieb wenigstens eines Zylinders des Spulengatters zum Durchführen einer Hubbewegung ermöglicht. Bevorzugt strömt die gesamte zum Betrieb des Zylinders, insbesondere aller Zylinder, des Spulengatters benötigte Druckluft vollständig durch die Steuereinheit. Um einen besonders einfachen Anschluss der Druckluftversorgung zu ermöglichen, handelt es sich bei dem Drucklufteingang und/oder dem Arbeitslufteingang und/oder dem Sensorlufteingang bevorzugt um einen standardisierten Anschluss, wobei ganz besonders bevorzugt alle Eingänge und Ausgänge der Steuereinheit identisch zueinander gebildet sind. Bei der dem Drucklufteingang zuzuführenden Druckluft handelt es sich bevorzugt um komprimierte Luft, die besonders bevorzugt einen Druck von etwa 6 bar aufweist. Grundsätzlich kann jedoch jedes Gas oder Gasgemisch mit einem beliebigen, zum Betrieb des Zylinders ausreichend hohen Druck in der Steuereinheit verwendet werden.

Der Arbeitsluftausgang ist erfindungsgemäß dafür vorgesehen, ein Arbeitsfluid, insbesondere Druckluft, von der Steuereinheit zum Zylinder leiten zu können. Bevorzugt ist dazu der Arbeitsluftausgang über die Ventileinheit unmittelbar mit dem Drucklufteingang verbindbar. Der Arbeitsluftausgang ist bevorzugt zum Anschluss einer Druckluftleitung gebildet. Weiterhin bevorzugt beträgt der maximale Druck am Arbeitslufteingang dem Druck der durch den Drucklufteingang zugeführten Druckluft.

Die Ventileinheit ist grundsätzlich ein Bauteil oder eine Baugruppe der Steuereinheit, die wenigstens eine Verbindung zwischen dem Drucklufteingang und dem Arbeitsdruckausgang herstellen und trennen kann bzw. einen Durchgang zwischen dem Drucklufteingang und dem Arbeitsdruckausgang öffnet und schließt. Eine Druckregelung durch die Ventileinheit muss dabei nicht gegeben sein. Bei einer vorteilhaften Weiterbildung der Ventileinheit ist es jedoch denkbar, eine Einstellbarkeit der Ventileinheit mit mehreren Druckstufen vorzusehen oder die Ventileinheit sogar stufenlos regelbar zu machen. Bevorzugt ist die Steuereinheit derart gebildet, dass sich die Ventileinheit in einer Ausgangsstellung der Steuereinheit in der geschlossenen Position befindet, wobei die Steuereinheit, besonders bevorzugt das Bedienelement und/oder ein Schieber der Steuereinheit pneumatisch oder mechanisch, insbesondere mittels einer Feder, auf die geschlossene Position der Ventileinheit hin vorgespannt ist.

Bei dem wenigstens einseitig wirkenden Zylinder kann es sich um einen beliebigen, pneumatisch oder hydraulisch betreibbaren Zylinder oder alternativ um einen anderen, linear wirkenden, insbesondere in wenigstens eine Raumrichtung verlängerbaren Aktor handeln. Bevorzugt ist der Zylinder ausschließlich in der ausfahrenden Richtung aktiv angetrieben bzw. mit Druckluft beaufschlagbar. Dabei ist der Zylinder bevorzugt ein Hubzylinder und weist besonders bevorzugt einen in eine Richtung durch Druckluft verschieblichen Kolben mit einer daran angeordneten Kolbenstange auf, wobei die Kolbenstange in Bezug zum Zylindergehäuse Arbeit verrichten kann. Bei einem einseitig wirkenden Zylinder befindet sich bevorzugt auf einer Seite des Kolbens eine Druckkammer, die besonders bevorzugt in jeder Position des Kolbens im Wesentlichen geschlossen ist, gegebenenfalls bis auf die Ausnahme einer oder mehrerer Drosselöffnungen. Weiterhin bevorzugt befindet sich auf der der Druckkammer gegenüberliegenden Seite des Zylinders und insbesondere im Bereich des Austritts der verschieblichen Kolbenstange aus dem Zylinder wenigstens eine Entlüftungsbohrung, sodass beim Verschieben des Kolbens aufgrund der in die Druckkammer einströmenden Druckluft auf der gegenüberliegenden Seite des Kolbens keine Kompression der Luft erfolgt. Besonders bevorzugt sind wenigstens zwei Entlüftungsbohrungen sich in Bezug zur Kolbenstange bzw. der Mittellängsachse des Zylinders gegenüberliegend an einem Zylinderende angeordnet.

Das Bedienelement kann zunächst ein beliebiges Bauteil oder eine beliebige Funktionseinheit sein, die wenigstens zwei Positionen oder Zustände aufweist. Das Bedienelement ist bevorzugt ein Taster und besonders bevorzugt ein Druckknopf. Weiterhin bevorzugt ist das Bedienelement durch Drücken betätigbar. Darüber hinaus kann die Steuereinheit auch ein zweites oder sogar weitere Bedienelemente aufweisen, wobei bevorzugt wenigstens ein erstes und ein zweites Bedienelement und besonders bevorzugt sämtliche Bedienelemente zueinander identisch gebildet sind.

Unter einer selbsthaltenden Ventilfunktion wird verstanden, dass die Ventileinheit wenigstens eine Position aufweist, in der es nach einem Überführen in dieser Position verbleibt, bis es aufgrund einer äußeren bzw. von außen gesteuerten Krafteinwirkung wieder aus dieser Position herausbewegt wird. Besonders bevorzugt ist dies die geöffnete Position der Ventileinheit. Weiterhin bevorzugt umfasst die selbsthaltende Ventilfunktion, dass die Ventileinheit durch eine kurze Betätigung des Bedienelements von der geschlossenen in die geöffnete Position gebracht werden kann und dann dort - auch ohne weitere Betätigung des Bedienelements - verbleibt bis die Ventileinheit durch eine weitere, gezielte Krafteinwirkung wieder in die geschlossene Position bewegt wird. Somit ist die Steuereinheit derart gebildet, dass eine selbsthaltende Ventilfunktion erreicht wird, bei der bei einer nur einmaligen und/oder kurzzeitigen Betätigung des Bedienelements die Ventileinheit in der geöffneten Position bleibt, sodass die Hubbewegung des Spulengatters vollständig ausgeführt wird.

Bei einem ansteigenden Druck und/oder dem Überschreiten eines Schwellendruckwerts am Sensorlufteingang, insbesondere beim Erreichen einer Endlage eines angeschlossenen Zylinders und präziser beim Erreichen einer Endlage des Kolbens eines angeschlossenen Zylinders, wird die Ventileinheit geschlossen, wobei besonders bevorzugt der am Sensorlufteingang der Steuereinheit anliegende Gasdruck die Ventileinheit unmittelbar von der geöffneten in die geschlossene Position überführt. Dabei wird der Schwellendruckwert am Sensorlufteingang bevorzugt in Bezug zum Druck am Arbeitsluftausgang festgelegt, wobei der Schwellendruckwert bevorzugt mehr als 50 %, besonders bevorzugt zwischen 50 % und 200 %, ganz besonders bevorzugt zwischen 75 % und 150 % und insbesondere bevorzugt zwischen 80 % und 120 % des Drucks am Arbeitsluftausgang beträgt. Insbesondere im Zusammenhang mit einer den Kolben des Zylinders durchdringenden Drosselöffnung ist eine solche Grenzwertfestlegung sinnvoll. Grundsätzlich kann der Schwellendruckwert jedoch beliebig an die jeweiligen Erfordernisse und insbesondere den mechanischen Aufbau des Spulengatters angepasst werden.

Erfindungsgemäß wird der am Arbeitsluftdruckausgang angeschlossene Zylinder beim Erreichen einer Endlage automatisch drucklos, wobei das automatische Druckloswerden des Zylinders mittels wenigstens einer Entlüftungsbohrung im Zylinder und/oder mittels eines Positionsschaltventils oder in beliebiger anderer Weise erreicht werden kann, wobei bevorzugt das Positionsschaltventil oder die Ventileinheit der Steuereinheit den Zylinder aktiv entlüftet. Dabei kann ein Positionsschaltventil beispielsweise mittels eines mechanischen Kontakts zur Detektion der Endlage geschaltet werden. Das Positionsschaltventil und/oder der mechanische Kontakt, insbesondere ein Lagekontakt, kann dabei gestellfest und/oder am Spulengatter und/oder am bzw. im Zylinder angeordnet sein. Darüber hinaus ist auch ein pneumatischer Sensorbereich innerhalb des Zylinders denkbar, um die Endlage zu erfassen.

Unter einer Betätigung des Bedienelements wird jede Bedienung verstanden, bei der das Bedienelement von einem definierten Zustand durch einen Bediener in einen anderen definierten Zustand gebracht wird. Dabei kann die Betätigung sowohl dauerhaft, als auch nur einmalig und/oder kurzzeitig erfolgen, wobei bevorzugt beide Arten der Betätigung zum gleichen Zustand der Steuereinheit führen.

Unter dem Überwachen der Hubbewegung des Zylinders mittels der Steuereinheit wird zunächst lediglich verstanden, dass ein spezifischer Zustand des Zylinders, insbesondere das Erreichen der Endlage, ermittelt wird. Eine durchgehende Überwachung der Position des Kolbens im Zylinder ist dafür nicht notwendig, kann aber zusätzlich auch vorgenommen werden. Zudem kann die Überwachung der Hubbewegung auch eine zeitweise oder durchgehende Überwachung des Drucks am Arbeitsluftausgang und/oder am Sensorlufteingang umfassen, um beispielsweise Überlastungszustände des Zylinders zu detektieren.

Gemäß einer vorteilhaften Weiterbildung der erfindungsgemäßen Steuereinheit ist diese derart gebildet, dass das Bedienelement nach der nur einmaligen und/oder kurzzeitigen Betätigung, insbesondere automatisch, deaktiviert wird und bevorzugt bei dem Druckanstieg am Sensorlufteingang und/oder dem Überschreiten des Schwellendruckwerts am Sensorlufteingang wieder aktiviert wird, wodurch in einfacher Weise eine Fehlbedienung des Bedienelements ausgeschlossen wird. Unter einem Deaktivieren wird zunächst lediglich verstanden, dass das Bedienelement in einen Betriebszustand gelangt oder gebracht wird, in dem eine erneute Betätigung nicht möglich ist und/oder zu keinem weiteren Effekt, insbesondere zu keiner Änderung des Zylinders und/oder der Hubbewegung des Spulengatters, führt. Entsprechend wird unter einer Aktivierung verstanden, dass das Bedienelement in einen Betriebszustand gelangt oder gebracht wird, in dem eine erneute Betätigung möglich ist und/oder zu einem Effekt, insbesondere dem Öffnen der Ventileinheit, führt.

Nach einer bevorzugten Ausgestaltung der erfindungsgemäßen Steuereinheit weist der Schieber besonders bevorzugt einen Kanal bzw. eine Freimachung auf, der nur in der geöffneten Position den Drucklufteingang mit dem Arbeitsluftausgang verbindet, wodurch eine sichere und zuverlässige Funktion der Ventileinheit in einfacher Weise sichergestellt wird und eine Fehlbedienung im Sinne eines Einstellens unerwünschter Ventilzustände ausgeschlossen ist. Dabei kann der Kanal grundsätzlich in beliebiger Weise gestaltet sein, solange der Kanal in der geöffneten Position der Ventileinheit den Drucklufteingang mit dem Arbeitsluftausgang verbindet. Bevorzugt verbindet der Kanal den Drucklufteingang ausschließlich mit dem Arbeitsluftausgang bzw. verläuft lediglich zwischen dem Drucklufteingang und dem Arbeitsluftausgang. Dabei kann der Kanal auch zumindest abschnittsweise im Inneren des Schiebers verlaufen oder ausschließlich an der Oberfläche des Schiebers, insbesondere als gerade Nut oder Ausnehmung, gebildet sein. Weiterhin bevorzugt weist der Kanal eine zur Position des Drucklufteingangs und/oder des Arbeitsluftausgangs am Gehäuse der Steuereinheit jeweils korrespondierende Öffnung bzw. eine korrespondierende Ausdehnung auf, um in der geöffneten Position der Ventileinheit den Drucklufteingang mit dem Arbeitsluftausgang zu verbinden.

Der Schieber ist bevorzugt vollständig innerhalb eines Gehäuses der Steuereinheit angeordnet.

Ebenfalls bevorzugt ist der Schieber zylinderförmig und/oder entlang der Mantelfläche bzw. entlang seiner Verschieberichtung an dem Gehäuse der Steuereinheit geführt und dabei besonders bevorzugt verdrehgesichert. Weiterhin bevorzugt ist der Schieber durch das Bedienelement linear verschiebbar. Dazu ist das Bedienelement bzw. ein verschieblicher Teil des Bedienelements besonders bevorzugt unmittelbar an dem Schieber angeordnet. Die Betätigungsrichtung des Bedienelements entspricht weiterhin bevorzugt der Richtung der Verschiebbarkeit des Schiebers und besonders bevorzugt sind das Bedienelement und der Schieber koaxial, ganz besonders bevorzugt entlang einer gemeinsamen Achse verschieblich angeordnet.

Bei einer bevorzugten Ausgestaltung der erfindungsgemäßen Steuereinheit ist eine Feder, insbesondere eine Spiralfeder, derart angeordnet, dass das Bedienelement auf die Stellung einer geschlossenen Position der Ventileinheit vorgespannt ist. Weiterhin bevorzugt wirkt die Federkraft der Kraft des Magneten und insbesondere der magnetischen Wirkrichtung entgegen, sodass nach einem Überwinden der magnetischen Kraft mittels eines am Sensorlufteingang angelegten Drucks die Ventileinheit, insbesondere der Schieber, und/oder das Bedienelement vollständig und zuverlässig in die Ausgangsposition bzw. die geschlossene Position bewegt werden. Diese Bewegung entspricht dabei einer automatischen Reaktivierung bzw. einer Rückstellung in die Ausgangslage des Bedienelements.

Eine bevorzugte Weiterbildung der erfindungsgemäßen Steuereinheit ist durch ein zweites Bedienelement gekennzeichnet, das nur aktiviert bzw. bedienbar ist, wenn das erste Bedienelement betätigt wurde und/oder mittels dem die Position und/oder die Funktion des ersten Bedienelements umgehend umkehrbar ist, wodurch in einfacher und für den Bediener in intuitiver Weise eine weitere Bedienfunktion und insbesondere ein Abbruch der durch das erste Bedienelement ausgelösten Funktion möglich ist. Mittels des zweiten Bedienelements kann insbesondere in einfacher Weise ein betätigtes erstes Bedienelement, dessen Betätigung die Ventileinheit geöffnet und entsprechend eine Hubbewegung des Spulengatters ausgelöst hat, wieder in die Ausgangsstellung gebracht werden, wodurch die Ventileinheit unabhängig von der Position des Spulengatters entlang der Hubbewegung und insbesondere vor Erreichen der Endlage umgehend in eine geschlossene Position gebracht werden kann. Zudem ist eine Rückstellung des ersten Bedienelements in die Ausgangslage auch unabhängig von dem Druck am Sensorlufteingang möglich. Entsprechend unterbricht das zweite Bedienelement den nach einer Betätigung des ersten Bedienelements ablaufenden Verfahrenszyklus umgehend, sodass das Selbsthalten der Ventilfunktion beendet werden kann. Das erste und zweite Bedienelement sind miteinander bevorzugt über einen Hebel und besonders bevorzugt über eine Wippe verbunden, sodass eine Betätigung des einen Bedienelements von einer ersten in eine zweite Position automatisch zur Bewegung des anderen Bedienelements von der zweiten in die erste Position bewirkt. Entsprechend befinden sich die beiden Bedienelemente grundsätzlich in sich unterscheidenden Zuständen. Insbesondere ist das eine Bedienelement stets eingedrückt und/oder deaktiviert, wenn sich das andere Bedienelement in einer drückbaren, ausgezogenen Position befindet und/oder entsprechend aktiviert ist.

Alternativ ist auch eine Ausführung denkbar, bei der nur ein Bedienelement vorgesehen ist, das derart gestaltet ist, dass es nach einer Betätigung manuell rückgestellt, insbesondere aus einer gedrückten Position wieder herausgezogen werden kann. Dabei ist das Bedienelement besonders bevorzugt als Pilzkopf-Schalter bzw. -Knopf gebildet. Weiterhin bevorzugt erfolgt ein umgehender Abbruch des ablaufenden Verfahrenszyklus bei einem Herausziehen bzw. manuellen Rückstellen des ersten Bedienelements.

Bei einer bevorzugten Ausgestaltung des erfindungsgemäßen Spulengatters weist der Zylinder an einem Ende, insbesondere im Bereich einer Kolbenstangenaustrittsöffnung, einen Sensorbereich mit einem Sensorluftausgang, insbesondere als Endlagensensor, auf, der zum Schließen der Ventileinheit mit dem Sensorlufteingang der Steuereinheit verbunden ist. Dabei ist der Sensorbereich bevorzugt derart gebildet, dass kurz vor dem Erreichen der Endlage des Kolbens im Zylinder ein Druckanstieg im Sensorbereich erfolgt, wodurch in besonders einfacher Weise pneumatisch die Endlage ermittelt werden kann. Dabei wirkt der Sensorbereich als Endanschlagssensor, insbesondere als pneumatischer Endanschlagssensor. Insbesondere vorteilhaft kann dabei zugleich ein Gas komprimiert werden, das am Sensorlufteingang der Steuereinheit angelegt werden kann und dann dort besonders bevorzugt unmittelbar die Ventileinheit in die geschossene Position bringt. Dabei ist der Sensorluftausgang des Zylinders bevorzugt unmittelbar mit dem Sensorlufteingang der Steuereinheit verbindbar bzw. kann zum bestimmungsgemäßen Gebrauch der Steuereinheit unmittelbar damit verbunden werden.

Gemäß einer vorteilhaften Weiterbildung des erfindungsgemäßen Spulengatters weist der Zylinder im Inneren an einem Ende, insbesondere im Sensorbereich, einen querschnittsreduzierten Bereich auf. Weiterhin ist an dem Kolben an dem auf den querschnittsreduzierten Bereich zuweisenden Seite ein Sensorkolben mit einem dem Durchmesser des querschnittsreduzierten Bereichs entsprechenden Durchmesser angeordnet, der kurz vor dem Erreichen der Endlage des Kolbens im Zylinder in den querschnittsreduzierten Bereich eintritt, sodass der Druck im Sensorbereich und somit am Sensorluftausgang ansteigt. Durch einen solchen ansteigenden Druck ist die Detektion der Endlage mittels einer besonders einfachen Konstruktion und besonders ausfallsicher möglich. Bevorzugt weisen das Innere des Zylinders und/oder der querschnittsreduzierte Bereich eine zylindrische Form und/oder einen gleichbleibenden Durchmesser über die gesamte Länge auf. Weiterhin bevorzugt hat der Kolben einen an das Innere des Zylinders angepassten Durchmesser und weist eine an den Zylinderinnenraum angepasste, insbesondere zylindrische Form auf. Ebenfalls bevorzugt ist die wenigstens eine Entlüftungsbohrung und besonders bevorzugt sind sämtliche Entlüftungsbohrungen außerhalb des querschnittsreduzierten Bereichs und ganz besonders bevorzugt dabei in einem an den querschnittsreduzierten Bereich angrenzenden Bereich angeordnet.

Das Innere des querschnittsreduzierten Bereichs bildet vorzugsweise einen verkleinerten Kolbenraum, innerhalb den der Sensorkolben, nicht jedoch der Kolben mit dem größeren Durchmesser, der dem Inneren des Zylinders entspricht, einschiebbar ist. Weiterhin bevorzugt ist der querschnittsreduzierte Bereich an dem Ende des Zylinders, an dem die Kolbenstange aus dem Zylinder austritt, angeordnet, und dabei besonders bevorzugt im bzw. als Teil des Kolbendeckels gebildet. Der Durchmesser des querschnittsreduzierten Bereichs ist bevorzugt wenigstens 5 %, besonders bevorzugt zwischen 10 % und 50 % und ganz besonders bevorzugt zwischen 15 % und 30 % kleiner als der Durchmesser des übrigen Inneren des Zylinders, insbesondere dem Bereich innerhalb dem der Kolben verschiebbar ist. Schließlich weist der Sensorkolben eine Länge entlang der Mittellängsachse der Kolbenstange auf, die bevorzugt zwischen 10 % und 100 %, besonders bevorzugt zwischen 20 % und 80 % und ganz besonders bevorzugt wenigstens 50 % der Länge des Sensorbereichs bzw. des querschnittsreduzierten Bereichs in dieser Richtung entspricht.

Bei einer möglichen Weiterbildung des erfindungsgemäßen Spulengatters ist im Kolben wenigstens eine den Kolben durchdringende Drosselöffnung vorgesehen, um den Druckaufbau im Sensorbereich beim Erreichen der Endlage mittels der Arbeitsluft zu verstärken, wodurch unabhängig von der Stellgeschwindigkeit des Kolbens im Zylinder zuverlässig die Endlage erfassbar ist. Dabei verbindet die Drosselöffnung bevorzugt die Druckkammer, an die die Arbeitsluft eingeleitet wird, unmittelbar mit der dem Kolben gegenüberliegenden Seite im Inneren des Zylinders. Weiterhin ist der Durchmesser der Drosselöffnung bevorzugt so klein gewählt, dass ein ausreichender Arbeitsdruck in der Druckkammer mittels der Arbeitsluft aus dem Arbeitsluftausgang der Steuereinheit aufgebaut werden kann, um den Zylinder mit einer ausreichenden Kraft der Kolbenstange betätigen zu können. Weiterhin bevorzugt ist der Durchmesser jedoch so groß, dass ausreichend schnell Arbeitsluft beim Erreichen der Endlage in den Sensorbereich einströmen kann, um ein schnelles und zuverlässiges Umschalten der Steuereinheit zu erreichen.

Nach einer bevorzugten Ausgestaltung des erfindungsgemäßen Spulengatter ist dieses in einer mittels der Hubbewegung des Zylinders erreichbaren obersten Position festlegbar und wird dazu insbesondere über einen Totpunkt hinausbewegt oder mittels einer Arretiervorrichtung insbesondere wieder lösbar festgelegt, sodass der Zylinder, insbesondere die Druckkammer des Zylinders, in der Endlage und gemeinsam mit dem Schließen der Ventileinheit drucklos verbleiben kann, ohne dass sich die Position des Spulengatters verändert. Dabei kann ein Federelement derart am Spulengatter angeordnet sein, dass des Spulengatter aufgrund der Federkraft in seiner Position gehalten wird.

Eine bevorzugte Ausgestaltung des erfindungsgemäßen Verfahrens zum aktiven pneumatischen Bewegen eines Zylinders sieht vor, dass das Bedienelement bei dem oder nach dem Schließen der Ventileinheit wieder automatisch, insbesondere aufgrund des ansteigenden Drucks an dem Sensorlufteingang, in eine Ausgangslage gebracht und somit für eine nächste Betätigung freigegeben wird, wodurch eine besonders einfache Bedienbarkeit erreicht und eine Fehlbedienung verhindert wird.

Gemäß einer vorteilhaften Weiterbildung des erfindungsgemäßen Verfahrens zum aktiven pneumatischen Bewegen eines Zylinders werden beim Schließen der Ventileinheit und insbesondere einem damit einhergehenden Verschieben eines Schiebers der Ventileinheit der Sensorlufteingang und/oder der Arbeitsluftausgang der Ventileinheit zur Entlüftung freigegeben. Dadurch wird in besonders einfacher Weise der Zylinder und insbesondere eine mit dem Arbeitsluftausgang verbundenen Druckkammer auf der einen Seite des Kolbens und/oder der andere, mit dem Sensorlufteingang der Steuereinheit verbundene Teil des Zylinders auf der anderen Seite des Kolbens entlüftet und somit druckfrei gestellt. Alternativ kann ein separates und/oder zwischen Zylinder und Ventileinheit bzw. Steuereinheit zwischengeschaltetes Entlüftungsventil vorgesehen sein, um ein Entlüften zu ermöglichen.

Ein Ausführungsbeispiel einer Steuereinheit, weiterer Teile eines Spulengatters sowie eines Verfahrens zum aktiven pneumatischen Anheben eines Spulengatters werden nachfolgend mit Bezug auf die Zeichnungen näher erläutert. In den Figuren zeigen:
- Fig. 1a: eine perspektivische Ansicht einer Steuereinheit,
- Fig. 1b: eine perspektivische Schnittansicht der in Fig. 1a dargestellten Steuereinheit,
- Fig. 2: eine perspektivische Schnittansicht eines Zylinders, und
- Fig. 3: ein Schema zur Veranschaulichung des Grundprinzips eines nicht erfindungsgemäßen Verfahrens zum aktiven pneumatischen Anheben eines Spulengatters mittels einer Steuereinheit.

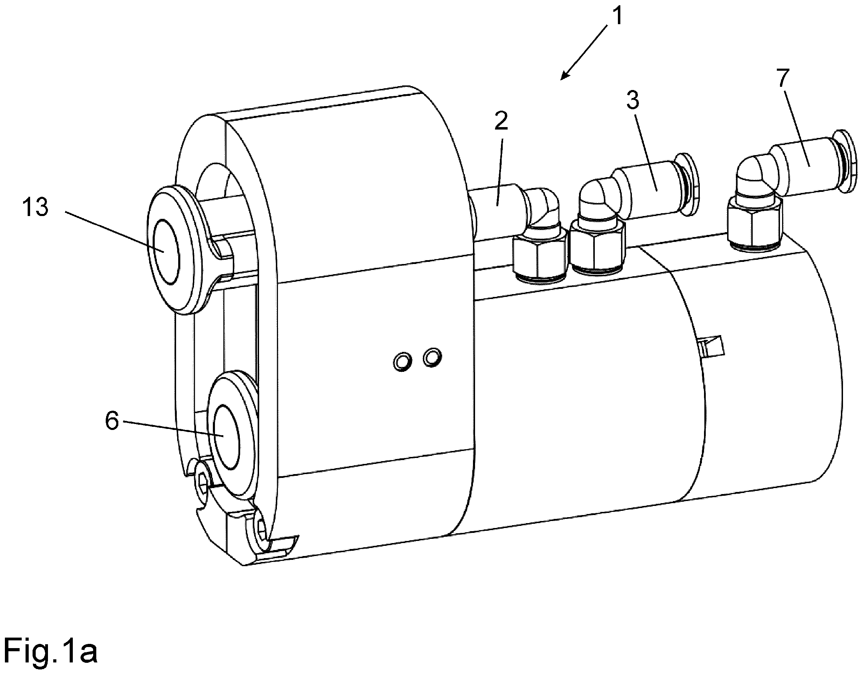

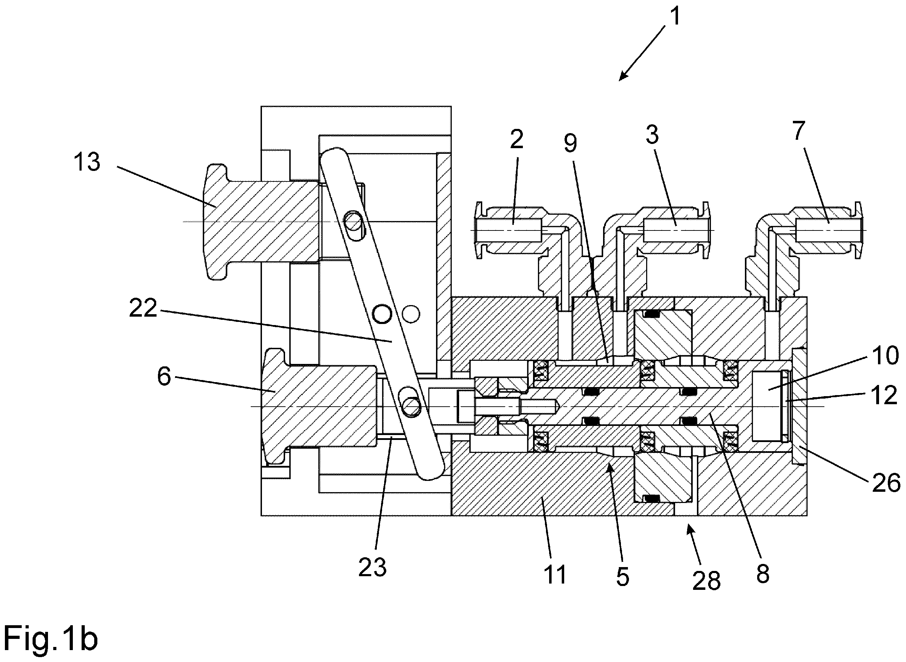

Bei einer in den Figuren 1a und 1b dargestellten Ausführung einer als integralen Einheit gebildeten Steuereinheit 1 zur pneumatischen Ansteuerung eines aktiven Spulengatters einer textilverarbeitenden Kabliermaschine sind an der Außenseite eines Gehäuses 11 an einer Seite zwei Bedienknöpfe 6, 13 und an einer anderen Seite drei Anschlüsse angeordnet. Der erste Anschluss ist dabei ein Drucklufteingang 2 an den ein Druckluftschlauch zum Zuführen von Druckluft mit 6 bar Druck zur Steuereinheit 1 und nachfolgend zu einem Pneumatikzylinder 4 des Spulengatters angeordnet werden kann. Unmittelbar daneben ist als zweiter Anschluss ein Arbeitsluftausgang 3 angeordnet, der dazu vorgesehen ist, Druckluft als Arbeitsmedium zu wenigstens einem Pneumatikzylinder 4 zu leiten. Neben diesen beiden Anschlüssen ist als dritter Anschluss schließlich am Gehäuse 11 ein Sensorlufteingang 7 an der Steuereinheit 1 angeordnet, an dem eine von einem pneumatischen Sensor bzw. einem Sensorbereich 15 des Pneumatikzylinders 4 kommende Druckluftleitung angeschlossen werden kann.

Im Inneren des Gehäuses 11 der Steuereinheit 1 ist eine Ventileinheit 5 angeordnet, die im Wesentlichen aus einem innerhalb eines zylinderförmigen Abschnitts des Gehäuses 11 verschieblichen, ebenfalls zylindrischen Schieber 8 gebildet ist. Dabei ist der Schieber 8 mittels der Bedienknöpfe 6, 13 verschieblich und kann zwischen einer geschlossenen und einer geöffneten Position der Ventileinheit 5 verschoben werden. In der Fig. 1b ist die Steuereinheit 1 mit der Ventileinheit 5 in der geöffneten Position dargestellt.

Dabei weist der Schieber 8 an seiner Oberfläche einen Kanal 9 auf, der in der geöffneten Position der Ventileinheit 5 den Drucklufteingang 2 mit dem Arbeitsluftausgang 3 verbindet. Wird der Schieber 8 in die geschlossene Position der Ventileinheit 5 verschoben, befindet sich der Kanal 9 nur noch im Bereich des Drucklufteingangs 2, jedoch nicht mehr im Bereich des Arbeitsluftausgangs 3, sodass keine Druckluft mehr aus dem Drucklufteingang 2 durch die Ventileinheit 5 in den Arbeitsluftausgang 3 und von dort weiter zu einem Pneumatikzylinder 4 strömen kann.

Der erste Bedienknopf 6 ist unmittelbar mit dem Schieber 8 der Ventileinheit 5 verbunden, sodass ein Eindrücken des Bedienknopfes 6 den Schieber 8 in die geöffnete Position der Ventileinheit 5 verschiebt. Entsprechend löst der erste Bedienknopf 6 eine Hubbewegung des Spulengatters aufgrund einer Aktivierung des Pneumatikzylinders 4 aus. Dabei ist der Bedienknopf 6 entlang einer Mittellängsachse des Schiebers 8 bewegbar angeordnet.

Über einen festen Wippenhebel 22 ist der erste Bedienknopf 6 mit dem zweiten, darüber angeordneten Bedienknopf 13 derart verbunden, dass sich beide Bedienknöpfe 6, 13 grundsätzlich in unterschiedlichen Betriebszuständen befinden. Wenn der erste Bedienknopf 6 gedrückt wird, kehrt der zweite Bedienknopf 13 zugleich aus der gedrückten Position heraus in eine Position, in der dieser betätigt werden kann, während eine erneute Betätigung des bereits eingedrückten ersten Bedienknopfes 6 dann nicht mehr möglich ist. Der zweite Bedienknopf 13 dient also dazu, die Funktion des ersten Bedienknopfes 6 umzukehren und einen durch den ersten Bedienknopf 6 ausgelösten Vorgang umgehend abzubrechen.

Um eine zuverlässige, selbsthaltende Ventilfunktion zu gewährleisten, ist an einem dem ersten Bedienknopf 6 gegenüberliegenden Ende des Schiebers 8 ein Permanentmagnet 10 angeordnet, der in der geöffneten Position der Ventileinheit 5 nahe genug an eine am Gehäuse 11 der Steuereinheit 1 angeordnete Eisenplatte 26 gelangt, sodass es zur magnetischen Anziehung und somit zu einer speziellen magnetischen Haltefunktion in der geöffneten Position der Ventileinheit 5 kommt. Somit ist es zum nachfolgenden Schließen der Ventileinheit 5 notwendig, die Haltekraft des Magneten 10 zu überwinden. Die Eisenplatte 26 ist dabei bevorzugt direkt am Gehäuse 11 der Steuereinheit 1 festgelegt oder bildet ein Teil des Gehäuses 11.

Um entgegen der Haltekraft des Magneten 10 den Schieber 8 in die geschlossene Position der Ventileinheit 5 zu verschieben, ist zwischen dem Gehäuse 11 im Bereich der Eisenplatte 26 und der den Magneten 10 aufweisenden Oberfläche des Schiebers 8 ein Ventilraum 12 angeordnet, der mit dem Sensorlufteingang 7 verbunden ist. Bei einem steigenden Druck am Sensorlufteingang 7 und somit in dem Ventilraum 12 übersteigt der auf den Schieber 8 wirkende Druck nach einer gewissen Zeit die magnetische Haltekraft abzüglich der Federkraft der Feder 23 und die Ventileinheit 5 schaltet schlagartig von der geöffneten in die geschlossene Position um.

Um ein vollständiges und sicheres Umschalten von der geöffneten Position in die geschlossene Position zu unterstützen, ist an dem ersten Bedienknopf 6 eine Spiralfeder 23 angeordnet, die den Bedienknopf 6 entgegen der Haltekraft des Magneten 10 auf die geschlossene Position hin vorspannt. Dazu ist die Spiralfeder 23 den ersten Bedienknopf 6 umgebend angeordnet.

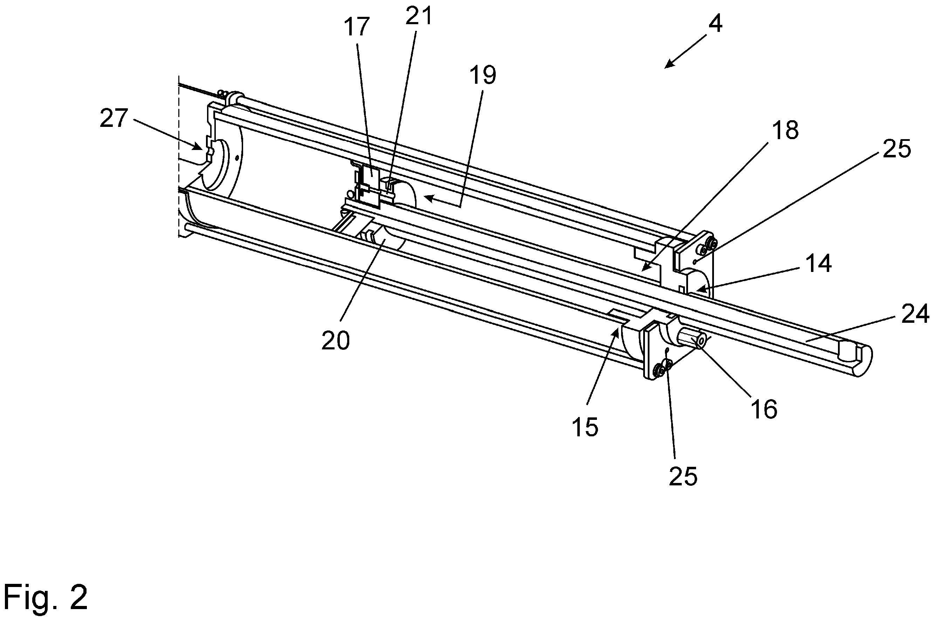

Der in Fig. 2 dargestellte Pneumatikzylinder 4 weist einen verschieblichen Kolben 17 mit einer einseitig aus dem Pneumatikzylinder 4 aus einer Kolbenstangenaustrittsöffnung 14 austretenden Kolbenstange 24 auf. Der Pneumatikzylinder 4 ist einseitig wirkend gebildet, d.h., lediglich auf der der Kolbenstange 24 gegenüberliegenden Seite des Kolbens 17 kann die aus dem Arbeitsluftausgang 3 der Steuereinheit 1 austretende Druckluft in einen Arbeitslufteingang 27 eingeleitet werden. Diese eingeleitete Druckluft verschiebt dann den Kolben 17 innerhalb des Pneumatikzylinders 4 derart, dass die Kolbenstange 24 aus der Kolbenstangenaustrittsöffnung 14 austritt und damit eine Hubbewegung eines Spulengatters bewirken kann.

Um bei dieser Bewegung die gegenüberliegende Seite im Inneren des Pneumatikzylinders 4 entlüften zu können, sind im Bereich des die Kolbenstangeaustrittsöffnung 14 aufweisenden Endes zwei Entlüftungsbohrungen 25 angeordnet. Wird der Kolben 17, beispielsweise aufgrund des Gewichts eines wenigstens mittelbar an der Kolbenstange 24 angeordneten Spulengatters wieder eingeschoben, tritt Luft durch die Entlüftungsbohrungen 25 in den Pneumatikzylinder 4 ein, sodass sich der Kolben 17 gedämpft absenkt. Dabei wird der Kolben 17 durch den Querschnittswiderstand des Arbeitslufteingangs 27 und/oder des Arbeitsluftausgangs 3 der Steuereinheit 1 sowie durch eine Entlüftungsbohrung 28 entlüftet.

Weiterhin weist der Pneumatikzylinder 4 an dem die Kolbenstangenaustrittsöffnung 14 aufweisenden Ende einen Sensorbereich 15 auf, der durch einen querschnittsreduzierten Bereich 18 gebildet ist. Die Entlüftungsbohrungen 25 sind dabei vor dem querschnittsreduzierten Bereich 18 angeordnet, während am Ende des querschnittsreduzierten Bereichs 18, unmittelbar neben der Kolbenstangenaustrittsöffnung 14 ein Sensorluftausgang 16 angeordnet ist, der unmittelbar mit dem Sensorlufteingang 7 der Steuereinheit 1 verbunden ist.

Auf der Arbeitsluft und/oder dem Arbeitslufteingang 27 abgewandten Seite des Kolbens 17 ist unmittelbar auf dem Kolben 17 ein Sensorkolben 20 angeordnet, wobei der Sensorkolben 20 einen geringeren Durchmesser als der Kolben 17 aufweist und koaxial zum Kolben 17 angeordnet ist. Dabei entspricht der Durchmesser des Sensorkolbens 20 dem Durchmesser des querschnittsreduzierten Bereichs 18. Gegen Hubende taucht der Sensorkolben 20 in den querschnittsreduzierten Bereich 18 und baut durch die weitere Hubbewegung in dem Sensorbereich 15 einen Druck auf. Dieser Druck wird dann durch den Sensorluftausgang 16 zum Sensorlufteingang 7 der Steuereinheit 1 weitergeleitet und gelangt dort in den Ventilraum 12.

Nun baut sich im Ventilraum 12 der Druck kontinuierlich auf und sobald die flächenproportionale Druckkraft die Magnethaltekraft des Permanentmagneten 10 überschreitet, bewegt sich der Schieber 8 in der Ventileinheit 5 sprunghaft in Fig. 1b nach links, d.h. in die geschlossene Position, wodurch der Arbeitsluftausgang 3 gegenüber dem Drucklufteingang abgesperrt wird. Zugleich werden der Arbeitsluftausgang 3 und der Sensorlufteingang 7 zur Entlüftung freigegeben. Damit ist der Pneumatikzylinder 4 beidseitig drucklos.

Weiterhin wird durch die Bewegung des Schiebers 8 das erste Bedienelement 6 wieder ausgerückt und dabei über den Wippenhebel 22 das zweite Bedienelement 13 gegenläufig zum ersten Bedienelement 6 bewegt. Im Ergebnis ist nun das Spulengatter in der oberen Stellung, der Pneumatikzylinder 4 vollständig drucklos und die Steuereinheit 1 wieder in der Ausgangslage. Das Spulengatter ist dabei durch übliche Maßnahmen gegen Herunterfallen gesichert, beispielsweise durch eine Feder oder eine Bewegung des Schwerpunktes über die Schwenkachse hinaus.

Um den Druckaufbau im Sensorbereich 15 des Pneumatikzylinders 4 zu verstärken und ggf. den querschnittsreduzierten Bereich 18 kürzer bauen zu können, kann eine Drosselöffnung 21 den Kolben 17 sowie den Sensorkolben 20 durchdringend angeordnet sein. Durch diese Drosselöffnung 21 kann dann beim Erreichen der Endlage der Arbeitsdruck durch den Kolben 17 hindurch dringen und auf den Sensorbereich 15 wirken.

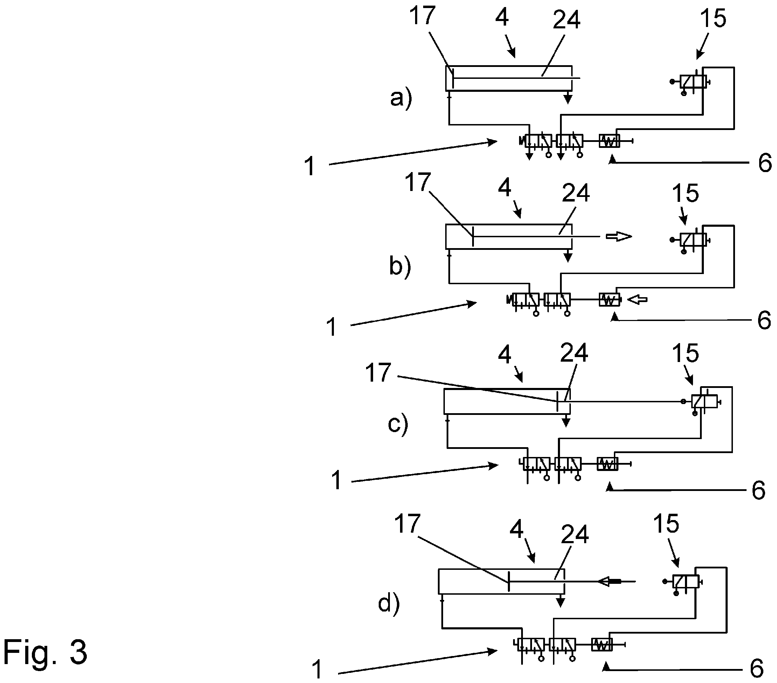

Schließlich zeigt Fig. 3 im Vergleich zum Vorbeschriebenen schematisch ein Grundprinzip zur Umsetzung eines nicht erfindungsgemäßen Verfahrens zum Betrieb eines Spulengatters, wobei hier die Drucklosschaltung durch ein Positionsschaltungsventil im außerhalb des Pneumatikzylinders 4 liegenden Sensorbereich 15 erreicht wird. Dabei wird das Positionsschaltungsventil durch einen mechanischen Kontakt bei Erreichen der Endlage geschaltet. In Figur 3 ist das Grundprinzip generell dargestellt, wie es mittels unterschiedlichster nicht erfindungsgemäßer Vorrichtungen betrieben werden kann.

In dem im Abschnitt a) der Fig. 3 dargestellten Ausgangszustand befindet sich ein Spulengatter in der unteren Beladeposition und soll nachfolgend mittels des Pneumatikzylinders 4 angehoben werden. Das erste Bedienelement 6 ist betriebsbereit. Das Positionsschaltungsventil im Sensorbereich 15 ist inaktiv und die Steuereinheit 1 hat den Pneumatikzylinder 4 vollständig entlüftet.

Drückt nun ein Bediener das erste Bedienelement 6, was dem in Abschnitt b) der Fig. 3 dargestellten Zustand entspricht, wird eine Ventileinheit 5 der Steuereinheit 1 in eine geöffnete Position bewegt und Druckluft strömt in den Pneumatikzylinder 4, der dadurch ausfährt und das Spulengatter anhebt, um dieses in eine Betriebsposition zu bringen. Zugleich mit dem Drücken des ersten Bedienelements 6 wird auch der Druckkreislauf durch das Positionsschaltungsventil in dem Sensorbereich 15 mit Druck beaufschlagt. Auch wenn der Bediener das erste Bedienelement 6 loslässt, verbleibt dieses in der gedrückten Position. Die Rückschaltung der Steuereinheit 1 erfolgt dadurch, dass das Positionsschaltungsventil in dem Sensorbereich 15 den Druckkreislauf unterbricht bzw. auf drucklos setzt und das Bedienelement 6 freigibt sowie das Positionsschaltungsventil im Sensorbereich 15 betriebsbereit geschaltet wird.

Beim Erreichen der Endlage des Spulengatters wird das aktive Positionsschaltungsventil ausgelöst, wobei zugleich auch das erste Bedienelement 6 wieder in die Ausgangslage herausgedrückt wird, wie es in Abschnitt c) der Fig. 3 dargestellt ist. Zugleich mit dem Schließen der Ventileinheit 5 wird der Pneumatikzylinder 4 drucklos gestellt, indem der Arbeitsdruckausgang 3 sowie der Sensorlufteingang 7 der Steuereinheit 1 entlüftet werden.

Schließlich kann das Spulengatter händisch durch den Bediener abgesenkt werden, wie es in Abschnitt d) der Fig. 3 dargestellt ist, wobei dies durch den Pneumatikzylinder 4 gedämpft erfolgt.

### Bezugszeichenliste

- 1: Steuereinheit
- 2: Drucklufteingang
- 3: Arbeitsluftausgang
- 4: Zylinder
- 5: Ventileinheit
- 6: Bedienelement
- 7: Sensorlufteingang
- 8: Schieber
- 9: Kanal des Schiebers
- 10: Magnet
- 11: Gehäuse der Steuereinheit
- 12: Ventilraum
- 13: zweites Bedienelement
- 14: Kolbenstangenaustrittsöffnung
- 15: Sensorbereich
- 16: Sensorluftausgang
- 17: Kolben
- 18: querschnittsreduzierter Bereich
- 19: Seite des Kolbens
- 20: Sensorkolben
- 21: Drosselöffnung
- 22: Wippe
- 23: Feder
- 24: Kolbenstange
- 25: Entlüftungsbohrung
- 26: Eisenplatte
- 27: Arbeitslufteingang
- 28: Entlüftungsbohrung

## Patentansprüche

1. Steuereinheit (1) zur pneumatischen Ansteuerung eines Zylinders (4), insbesondere eines aktiven Spulengatters einer textilverarbeitenden Maschine oder einer Kabliermaschine, mit
- einem Drucklufteingang (2) zum Anschluss einer Druckluftversorgung,
- einem Arbeitsluftausgang (3) verbindbar mit dem wenigstens einseitig wirkenden Zylinder (4) zum Betreiben des Zylinders (4),
- einer zwischen dem Drucklufteingang (2) und dem Arbeitsluftausgang (3) angeordneten Ventileinheit (5), und
- einem Bedienelement (6) zum Öffnen der Ventileinheit (5) zum Auslösen einer Hubbewegung des verbindbaren Zylinders (4),
- wobei die Ventileinheit (5) einen Schieber (8) aufweist, der durch die Betätigung des Bedienelements (6) im Inneren der Steuereinheit (1) von einer geschlossenen in eine geöffnete Position der Ventileinheit (5) verschiebbar ist,
- wobei die Steuereinheit (1) derart gebildet ist, dass eine selbsthaltende Ventilfunktion erreicht wird, bei der bei einer nur einmaligen und/oder kurzzeitigen Betätigung des Bedienelements (6) die Hubbewegung des Zylinders (4) vollständig ausführbar ist, und
- wobei die Steuereinheit (1) derart mit einem Endlagensensor des Zylinders (4) verbindbar ist, dass bei einer Aktivierung des Endlagensensors die Ventileinheit (5) geschlossen wird,
- wobei die Steuereinheit (1) einen Sensorlufteingang (7) zum Verbinden des Endlagensensors aufweist, wobei bei einem Druckanstieg und/oder einem Überschreiten eines Schwellendruckwerts eines Sensordrucks am Sensorlufteingang (7) die Ventileinheit (5) geschlossen wird,
**dadurch gekennzeichnet, dass**
ein Magnet (10) am Schieber (8) derart angeordnet ist, dass der Schieber (8) in der geöffneten Position der Ventileinheit (5) durch die Haltekraft des Magneten (10) in der geöffneten Position gehalten ist, und
der Sensorlufteingang (7) derart angeordnet ist, dass ein daran angelegter Druck der Haltekraft des Magneten (10) entgegenwirkt, wobei dazu der Sensorlufteingang (7) mit einem geschlossenen, zwischen dem Gehäuse (11) der Steuereinheit (1) und dem Magneten (10) angeordneten Ventilraum (12) verbunden ist.

2. Steuereinheit nach Anspruch 1, **dadurch gekennzeichnet, dass** das Bedienelement (6) nach der nur einmaligen und/oder kurzzeitigen Betätigung automatisch deaktiviert wird und bei dem Druckanstieg und/oder dem Überschreiten des Schwellendruckwerts des Sensordrucks am Sensorlufteingang (7) wieder aktiviert wird.

3. Steuereinheit nach Anspruch 1 oder 2, **dadurch gekennzeichnet, dass** der Schieber (8) einen Kanal (9) aufweist, der in der geöffneten Position den Drucklufteingang (2) mit dem Arbeitsluftausgang (3) verbindet.

4. Steuereinheit nach wenigstens einem der vorhergehenden Ansprüche, **gekennzeichnet durch** ein zweites Bedienelement (13), das nur aktiviert ist, wenn das erste Bedienelement (6) betätigt wurde und/oder mittels dem die Position und/oder die Funktion des ersten Bedienelements (6) umgehend umkehrbar ist.

5. Spulengatter für eine textilverarbeitende Maschine, insbesondere für eine Kabliermaschine, mit
- einer Steuereinheit (1) nach einem der vorhergehenden Ansprüche, und
- einem wenigstens einseitig wirkenden Zylinder (4) zum Ausführen einer Hubbewegung des Spulengatters an der textilverarbeitenden Maschine, wobei
- die Steuereinheit (1) und/oder der Zylinder (4) derart gebildet sind, dass der Zylinder (4) bei oder nach dem Erreichen einer Endlage der Hubbewegung automatisch drucklos wird.

6. Spulengatter nach Anspruch 5, **dadurch gekennzeichnet, dass** der Zylinder (4) an einem Ende im Bereich einer Kolbenstangenaustrittsöffnung (14) einen Sensorbereich (15) mit einem Sensorluftausgang (16) als Endlagensensor aufweist, der zum Schließen der Ventileinheit (5) mit dem Sensorlufteingang (7) der Steuereinheit (1) verbunden ist, wobei der Sensorbereich (15) derart gebildet ist, dass kurz vor dem Erreichen der Endlage eines verschieblichen Kolbens (17) im Zylinder (4) ein Druckanstieg im Sensorbereich (15) erfolgt.

7. Spulengatter nach Anspruch 6, **dadurch gekennzeichnet, dass** der Zylinder (4) im Sensorbereich (15) einen querschnittsreduzierten Bereich (18) aufweist und an dem Kolben (17) an dem auf den querschnittsreduzierten Bereich (18) zuweisenden Seite (19) ein Sensorkolben (20) mit einem dem Durchmesser des querschnittsreduzierten Bereichs (18) entsprechenden Durchmesser angeordnet ist, der kurz vor dem Erreichen der Endlage des Kolbens (17) im Zylinder (4) in den querschnittsreduzierten Bereich (18) eintritt, sodass der Druck im Sensorbereich (15) und somit am Sensorluftausgang (16) ansteigt.

8. Spulengatter nach Anspruch 6, **dadurch gekennzeichnet, dass** im Kolben (17) wenigstens eine den Kolben (17) durchdringende Drosselöffnung (21) vorgesehen ist, um den Druckaufbau im Sensorbereich (15) beim Erreichen der Endlage mittels der Arbeitsluft zu verstärken.

9. Spulengatter nach wenigstens einem der Ansprüche 5 - 8, **dadurch gekennzeichnet, dass** das Spulengatter in einer mittels der Hubbewegung des Zylinders (4) erreichbaren obersten Position festlegbar ist und dazu über einen Totpunkt hinausbewegt oder mittels einer Arretiervorrichtung festgelegt wird.

10. Verfahren zum aktiven pneumatischen Bewegen eines Zylinders (4), insbesondere eines Spulengatters einer textilverarbeitenden Maschine oder einer Kabliermaschine, mit den Schritten:
- Betätigen des Bedienelements (6) der Steuereinheit (1) nach einem der Ansprüche 1 bis 4, wodurch die zwischen dem Drucklufteingang (2) und dem Arbeitsluftausgang (3) angeordnete Ventileinheit (5) der Steuereinheit (1) solange geöffnet wird, dass die selbsthaltende Ventilfunktion erreicht und eine Bewegung des Zylinders (4), insbesondere eine Hubbewegung des Spulengatters, mittels des an dem Arbeitsluftausgang (3) angeschlossenen, wenigstens einseitig wirkenden Zylinders (4) vollständig ausgeführt wird, und
- Überwachen der Bewegung des Zylinders (4) mittels der Steuereinheit (1), wobei bei einem ansteigenden Druck und/oder einem Überschreiten eines Schwellendruckwerts an dem Sensorlufteingang (7) der Steuereinheit (1) die Ventileinheit (5) geschlossen wird.

11. Verfahren zum aktiven pneumatischen Bewegen eines Zylinders (4) nach Anspruch 10, **dadurch gekennzeichnet, dass** das Bedienelement (6) bei dem oder nach dem Schließen der Ventileinheit (5) wieder automatisch aufgrund des ansteigenden Drucks an dem Sensorlufteingang (7) in eine Ausgangslage gebracht und somit für eine nächste Betätigung freigegeben wird.

12. Verfahren zum aktiven pneumatischen Bewegen eines Zylinders (4) nach Anspruch 10 oder 11, **dadurch gekennzeichnet, dass** beim Schließen der Ventileinheit (5) und dem damit einhergehenden Verschieben des Schiebers (8) der Ventileinheit (5) der Sensorlufteingang (7) und/oder der Arbeitsluftausgang (3) der Ventileinheit (5) zur Entlüftung freigegeben werden.

## Claims

1. Control unit (1) for the pneumatic control of a cylinder (4), in particular an active bobbin creel of a textile processing machine or a cabling machine, comprising
- a compressed air inlet (2) for connecting a compressed air supply,
- a working air outlet (3) connectable to the at least unilaterally acting cylinder (4) for operating the cylinder (4),
- a valve unit (5) arranged between the compressed air inlet (2) and the working air outlet (3), and
- an operating element (6) for opening the valve unit (5) to trigger a lifting movement of the connectable cylinder (4),
- wherein the valve unit (5) has a slide (8) which can be slid from a closed to an open position of the valve unit (5) by actuating the operating element (6) inside the control unit (1),
- wherein the control unit (1) is designed in such a way that a self-holding valve function is achieved in which the lifting movement of the cylinder (4) can be fully carried out upon only a single and/or brief actuation of the operating element (6), and
- wherein the control unit (1) can be connected to an end-position sensor of the cylinder (4) such that the valve unit (5) is closed when the end-position sensor is activated,
- wherein the control unit (1) has a sensor air inlet (7) for connecting the end position sensor, wherein the valve unit (5) is closed when there is a pressure increase and/or when a threshold pressure value of a sensor pressure at the sensor air inlet (7) is exceeded,
**characterized in that**
a magnet (10) is arranged on the slide (8) such that the slide (8) is held in the open position of the valve unit (5) by the holding force of the magnet (10) in the open position, and
the sensor air inlet (7) is arranged such that a pressure applied thereto counteracts the holding force of the magnet (10), wherein to this end the sensor air inlet (7) is connected to a closed valve chamber (12) arranged between the housing (11) of the control unit (1) and the magnet (10).

2. Control unit according to claim 1, **characterized in that** the operating element (6) is automatically deactivated after only a single and/or brief actuation and is reactivated when the pressure increases and/or the threshold pressure value of the sensor pressure at the sensor air inlet (7) is exceeded.

3. Control unit according to claim 1 or claim 2, **characterized in that** the slide (8) has a channel (9) which, in the open position, connects the compressed air inlet (2) to the working air outlet (3).

4. Control unit according to at least one of the preceding claims, **characterized by** a second operating element (13) which is only activated when the first operating element (6) has been actuated and/or by means of which the position and/or the function of the first operating element (6) is immediately reversible.

5. Bobbin creel for a textile processing machine, in particular for a cabling machine, comprising
- a control unit (1) according to any of the preceding claims, and
- an at least unilaterally acting cylinder (4) for carrying out a lifting movement of the bobbin creel on the textile processing machine, wherein
- the control unit (1) and/or the cylinder (4) are designed in such a way that the cylinder (4) is automatically depressurized upon or after reaching an end position of the lifting movement.

6. Bobbin creel according to claim 5, **characterized in that** the cylinder (4) has a sensor region (15) at one end in the region of a piston rod outlet opening (14), which sensor region has a sensor air outlet (16) as an end position sensor and is connected to the sensor air inlet (7) of the control unit (1) for closing the valve unit (5), wherein the sensor region (15) is designed such that, shortly before a displaceable piston (17) in the cylinder (4) reaches the end position, a pressure increase in the sensor region (15) occurs.

7. Bobbin creel according to claim 6, **characterized in that** the cylinder (4) has a cross-sectionally reduced region (18) in the sensor region (15), and a sensor piston (20) having a diameter corresponding to the diameter of the cross-sectionally reduced region (18) is arranged on the piston (17) on the side (19) facing the cross-sectionally reduced region (18), which sensor piston enters the cross-sectionally reduced region (18) shortly before the piston (17) in the cylinder (4) reaches the end position, so that the pressure in the sensor region (15) and thus at the sensor air outlet (16) increases.

8. Bobbin creel according to claim 6, **characterized in that** at least one throttle opening (21) that passes through the piston (17) is provided in the piston (17) in order to increase the pressure build-up in the sensor region (15) by means of the working air when the end position is reached.

9. Bobbin creel according to at least one of claims 5 - 8,
**characterized in that** the bobbin creel can be fixed in an uppermost position that can be reached by means of the lifting movement of the cylinder (4) and to this end is moved beyond a dead center or fixed by means of a locking device.

10. Method for actively pneumatically moving a cylinder (4), in particular a bobbin creel of a textile processing machine or a cabling machine, comprising the steps:
- actuating the operating element (6) of the control unit (1) according to any of claims 1 to 4, whereby the valve unit (5) of the control unit (1) arranged between the compressed air inlet (2) and the working air outlet (3) is opened as long as the self-holding valve function is achieved and a movement of the cylinder (4), in particular a lifting movement of the bobbin creel, is completely carried out by means of the at least unilaterally acting cylinder (4) connected to the working air outlet (3), and
- monitoring the movement of the cylinder (4) by means of the control unit (1), wherein the valve unit (5) is closed when there is a pressure increase and/or a threshold pressure value at the sensor air inlet (7) of the control unit (1) is exceeded.

11. Method for actively pneumatically moving a cylinder (4) according to claim 10, **characterized in that,** during or after the closing of the valve unit (5), the operating element (6) is automatically returned to an initial position due to the increasing pressure at the sensor air inlet (7) and is thus released for the next actuation.

12. Method for actively pneumatically moving a cylinder (4) according to claim 10 or claim 11, **characterized in that** the sensor air inlet (7) and/or the working air outlet (3) of the valve unit (5) are released for venting when the valve unit (5) is closed and the slide (8) of the valve unit (5) is slid in association therewith.

## Revendications

1. Unité de commande (1) permettant la commande pneumatique d'un cylindre (4), en particulier d'un cantre actif d'une machine de traitement de textiles ou d'une machine de câblage, comportant
- une entrée d'air comprimé (2) destinée à être raccordée à une alimentation en air comprimé,
- une sortie d'air de travail (3) pouvant être reliée au cylindre (4) agissant au moins d'un côté pour faire fonctionner le cylindre (4),
- une unité formant soupape (5) disposée entre l'entrée d'air comprimé (2) et la sortie d'air de travail (3), et
- un élément de manoeuvre (6) permettant l'ouverture de l'unité formant soupape (5) afin de déclencher un mouvement de levage du cylindre (4) pouvant être relié,
- dans laquelle l'unité formant soupape (5) présente un coulisseau (8) qui peut être déplacé, par l'actionnement de l'élément de manoeuvre (6), à l'intérieur de l'unité de commande (1) d'une position fermée à une position ouverte de l'unité formant soupape (5),
- dans laquelle l'unité de commande (1) est formée de telle sorte qu'une fonction de soupape à maintien automatique est atteinte, fonction de soupape lors de laquelle le mouvement de levage du cylindre (4) est entièrement exécutable lors d'un actionnement unique et/ou de courte durée de l'élément de manoeuvre (6), et
- dans laquelle l'unité de commande (1) peut être connectée à un capteur de fin de course du cylindre (4) de telle sorte que l'unité formant soupape (5) est fermée lors d'une activation du capteur de fin de course,
- dans laquelle l'unité de commande (1) présente une entrée d'air de capteur (7) destinée à être reliée au capteur de fin de course, dans laquelle l'unité formant soupape (5) est fermée lors d'une augmentation de pression et/ou d'un dépassement d'une valeur de pression seuil d'une pression de capteur au niveau de l'entrée d'air de capteur (7),
**caractérisée en ce que**
un aimant (10) est disposé sur le coulisseau (8) de telle sorte que, dans la position ouverte de l'unité formant soupape (5), le coulisseau (8) est maintenu dans la position ouverte par la force de maintien de l'aimant (10), et
l'entrée d'air de capteur (7) est disposée de telle sorte qu'une pression qui lui est appliquée s'oppose à la force de maintien de l'aimant (10), dans laquelle l'entrée d'air de capteur (7) est à cet effet reliée à une chambre de soupape (12) fermée, disposée entre le boîtier (11) de l'unité de commande (1) et l'aimant (10).

2. Unité de commande selon la revendication 1, **caractérisée en ce que** l'élément de manoeuvre (6) est automatiquement désactivé après l'actionnement unique et/ou de courte durée, et est réactivé lors de l'augmentation de pression et/ou du dépassement de la valeur de pression seuil de la pression de capteur au niveau de l'entrée d'air de capteur (7).

3. Unité de commande selon la revendication 1 ou 2, **caractérisée en ce que** le coulisseau (8) présente un canal (9) qui, dans la position ouverte, relie l'entrée d'air comprimé (2) à la sortie d'air de travail (3).

4. Unité de commande selon au moins l'une des revendications précédentes, **caractérisée par** un second élément de manoeuvre (13) qui n'est activé que lorsque le premier élément de manoeuvre (6) a été actionné et/ou au moyen duquel la position et/ou la fonction du premier élément de manoeuvre (6) peuvent être immédiatement inversées.

5. Cantre pour une machine de traitement de textiles, en particulier pour une machine de câblage, comportant
- une unité de commande (1) selon l'une des revendications précédentes, et
- un cylindre (4) agissant au moins d'un côté pour exécuter un mouvement de levage du cantre sur la machine de traitement de textiles, dans lequel
- l'unité de commande (1) et/ou le cylindre (4) sont formés de telle sorte que le cylindre (4) est automatiquement mis hors pression lorsqu'une position de fin de course du mouvement de levage est atteinte ou après ladite atteinte.

6. Cantre selon la revendication 5, **caractérisé en ce que** le cylindre (4) présente, à une extrémité dans la zone d'une ouverture de sortie de tige de piston (14), une zone de capteur (15) comportant une sortie d'air de capteur (16) comme capteur de position de fin de course, laquelle sortie d'air de capteur est reliée à l'entrée d'air de capteur (7) de l'unité de commande (1) pour fermer l'unité formant soupape (5), dans lequel la zone de capteur (15) est formée de telle sorte que, peu avant d'atteindre la position de fin de course d'un piston (17) coulissant dans le cylindre (4), il se produit une augmentation de pression dans la zone de capteur (15).

7. Cantre selon la revendication 6, **caractérisé en ce que** le cylindre (4) présente, dans la zone de capteur (15), une zone (18) à section transversale réduite et un piston de capteur (20) d'un diamètre correspondant au diamètre de la zone (18) à section transversale réduite est disposé sur le piston (17) sur le côté (19) dirigé vers la zone (18) à section transversale réduite, lequel piston de capteur entre dans la zone (18) à section transversale réduite peu avant que le piston (17) n'atteigne sa position de fin de course dans le cylindre (4), de sorte que la pression augmente dans la zone de capteur (15) et donc au niveau de la sortie d'air de capteur (16).

8. Cantre selon la revendication 6, **caractérisé en ce que,** dans le piston (17), il est prévu au moins une ouverture d'étranglement (21) traversant le piston (17) pour amplifier la montée en pression dans la zone de capteur (15) lorsque la position de fin de course est atteinte au moyen de l'air de travail.

9. Cantre selon au moins l'une des revendications 5 à 8,
**caractérisé en ce que** le cantre peut être fixé dans une position supérieure pouvant être atteinte au moyen du mouvement de levage du cylindre (4) et est déplacé à cet effet au-delà d'un point mort ou est fixé au moyen d'un dispositif d'arrêt.

10. Procédé permettant le déplacement pneumatique actif d'un cylindre (4), en particulier d'un cantre d'une machine de traitement de textiles ou d'une machine de câblage, comportant les étapes consistant à :
- actionner l'élément de manoeuvre (6) de l'unité de commande (1) selon l'une des revendications 1 à 4, moyennant quoi l'unité formant soupape (5) de l'unité de commande (1), disposée entre l'entrée d'air comprimé (2) et la sortie d'air de travail (3), est ouverte aussi longtemps que la fonction de soupape à maintien automatique est atteinte et qu'un mouvement du cylindre (4), en particulier un mouvement de levage du cantre, est complètement exécuté au moyen du cylindre (4) raccordé à la sortie d'air de travail (3) et agissant au moins d'un côté, et
- surveiller le mouvement du cylindre (4) au moyen de l'unité de commande (1), dans lequel l'unité formant soupape (5) est fermée lors d'une augmentation de la pression et/ou d'un dépassement d'une valeur de pression seuil au niveau de l'entrée d'air de capteur (7) de l'unité de commande (1).

11. Procédé permettant le déplacement pneumatique actif d'un cylindre (4) selon la revendication 10, **caractérisé en ce que** l'élément de manoeuvre (6) est ramené automatiquement dans une position initiale lors de la fermeture ou après la fermeture de l'unité formant soupape (5) en raison de l'augmentation de la pression au niveau de l'entrée d'air de capteur (7), et est ainsi libéré pour un prochain actionnement.

12. Procédé permettant le déplacement pneumatique actif d'un cylindre (4) selon la revendication 10 ou 11, **caractérisé en ce que,** lors de la fermeture de l'unité formant soupape (5) et du déplacement qui en résulte du coulisseau (8) de l'unité formant soupape (5), l'entrée d'air de capteur (7) et/ou la sortie d'air de travail (3) de l'unité formant soupape (5) sont libérées pour la purge.
